# EUROPÄISCHE PATENTANMELDUNG

(11) **EP 2 196 251 A1**
(43) Veröffentlichungstag der Anmeldung: **16.06.2010**
(21) Anmeldenummer: 08021089.1
(22) Anmeldetag: 04.12.2008
(51) Int. Cl.: B01D 53/00, F25J 3/06

(54) **Kohlendioxid-Abtrennanlage und Verfahren zum Betrieb einer solchen Anlage**

(71) Anmelder: Siemens Aktiengesellschaft, 80333 München (DE)
(72) Erfinder: Graeber, Carsten, 91056 Erlangen (DE); Zimmermann, Gerhard, Dr., 91315 Höchstadt/Aisch (DE)

(57) **Zusammenfassung**

Die Erfindung betrifft eine Kohlendioxid-Abtrennanlage (1) zum Abtrennen von Kohlendioxid aus Synthesegas (2) mit einer ersten Kälteanlage (4) zum Kühlen des Synthesegases und mit einer in Strömungsrichtung des Synthesegases (2) der ersten Kälteanlage (4) nachgeschalteten ersten Phasentrenneinrichtung (3) zum Abtrennen flüssigen oder festen Kohlendioxids. Die Erfindung betrifft ferner ein Verfahren zum Betrieb einer solchen Kohlendioxid-Abtrennanlage (1).

## Beschreibung

Die Erfindung betrifft eine Kohlendioxid-Abtrennanlage, insbesondere eine Kohlendioxid-Abtrennanlage zur Abtrennung von Kohlendioxid aus einem Synthesegas. Die Erfindung betrifft ferner ein Verfahren zum Abtrennen von Kohlendioxid aus einem Synthesegas.

Mit Kraftwerken, denen ein kombinierter Gas- und Dampfturbinenprozess zugrunde liegt, kann der Schadstoffausstoß deutlich herabgesetzt werden. Diese Kraftwerke werden im Fachjargon als GuD-Kraftwerke bezeichnet.

Bei einer Unterform der GuD-Kraftwerke, den sogenannten IGCC-Kraftwerken ("IGCC" ist eine Abkürzung für "Integrated Gasification Combined Cycle"), weist das GuD-Kraftwerk zusätzlich eine integrierte Brennstoffvergasung auf, mittels derer aus flüssigem oder festem Brennstoff - etwa Kohle, aber auch Biomasse oder Abfall -, der durch Teilverbrennung mit Luft oder angereicherter Luft, d.h. Sauerstoff, aufgeheizt wurde, und wasserdampf in einem Vergaser so genanntes Wassergas (das auch als Synthesegas bezeichnet wird), im Wesentlichen eine Mischung aus Kohlenmonoxid (CO) und Wasserstoff (H₂), entsteht.

C + 0,5 O₂ →CO

C + H₂O → CO + H₂

C + CO₂ ⇄ 2 CO (Boudouard-Gleichgewicht)

Wie die Gleichungen zeigen, ist für die Vergasung der Brennstoffe zu Synthesegas Sauerstoff erforderlich. Zur Erzeugung des Sauerstoffs weisen IGCC-Kraftwerke Luftzerlegungsanlagen auf, die beispielsweise kryogen arbeiten (membranbasierte Luftzerlegungsanlagen sind in der Entwicklung) und in denen aus der Umgebungsluft durch fraktionierte Destillation neben dem benötigten Sauerstoff vor allem Stickstoff erzeugt wird.

Vor der Verbrennung des Synthesegases in der Gasturbine erfolgt in der Regel eine Reinigung und Konditionierung des Synthesegases. Insgesamt betrachtet werden auf diese Weise Schadstoffe schon vor der Verbrennung abgetrennt oder entstehen erst gar nicht. Aufgrund der Umwandlung des Brennstoffs in ein im Wesentlichen aus Kohlenmonoxid (CO) und Wasserstoff (H₂) bestehendes Synthesegas sind IGCC-Kraftwerke insbesondere für die Abtrennung des Kohlenstoffinventars noch vor der eigentlichen Verbrennung in der Gasturbine geeignet (Pre-Combustion Carbon Capture).

Dazu wird in einem weiteren Schritt nach der Vergasung das Kohlenmonoxid (CO) mit Wasser (H₂O) zu Wasserstoff (H₂) und Kohlendioxid (CO₂) konvertiert (CO-Shift).

CO + H₂O ⇄ CO₂ + H₂ (Wassergas-Shift-Reaktion)

Aus dem resultierenden Gasgemisch wird Kohlendioxid (CO₂) abgetrennt und für eine weitere Nutzung bzw. Endlagerung auf hohe Drücke verdichtet.

In den derzeitigen Konzepten sind für die Kohlendioxid-Abtrennung nasse Waschverfahren vorgesehen, wie sie aus der chemischen Industrie bekannt sind. Beispiele sind das Rectisol-Verfahren (mit Methanol als Lösungsmittel) oder das Selexol-Verfahren (Polyethylenglykoldimethylether). Dabei wird Kohlendioxid vom Lösungsmittel absorbiert und im Desorptionsschritt durch Druck- bzw. Temperaturwechsel freigesetzt. Der Energie-Eigenbedarf wird im Wesentlichen verursacht durch das Kühlen und Umpumpen des Lösungsmittels und die Aufwärmung mittels Dampf, der damit nicht für die Erzeugung elektrischer Energie zur Verfügung steht. Das Kohlendioxid fällt beim Rectisol-Verfahren gasförmig auf nahezu Umgebungsdruck an und muss daher für Transport bzw. Lagerung auf ein entsprechend hohes Druckniveau verdichtet werden. Üblicherweise wird die Abtrennung des im Synthesegas enthaltenen Schwefelwasserstoffs (H₂S) mit der des Kohlendioxids kombiniert.

Aufgrund des für die wesentlichen Schritte der Kohlendioxid-abtrennung - Konvertierung, Abtrennung und Verdichtung - notwendigen Energieeigenbedarfs (thermische und elektrische Energie) liegt der Wirkungsgrad eines solchen IGCC-Kraftwerks mit Kohlendioxid-Abtrennung signifikant unter dem der vergleichbaren Referenz ohne Kohlendioxid-Abtrennung und führt zu einem deutlich erhöhten Brennstoffeinsatz zur Erzeugung der gleichen Strommenge.

Aufgabe der Erfindung ist daher die Angabe einer Kohlendioxid-Abtrennanlage mit reduziertem Energiebedarf sowie die Angabe eines Verfahrens zum Abtrennen von Kohlendioxid aus einem Synthesegas mit möglichst geringem Energieaufwand.

Erfindungsgemäß wird die auf eine Vorrichtung gerichtete Aufgabe gelöst durch eine Kohlendioxid-Abtrennanlage zum Abtrennen von Kohlendioxid aus Synthesegas, umfassend eine Kälteanlage zum Kühlen des Synthesegases und eine in Strömungsrichtung des Synthesegases der Kälteanlage nachgeschaltete Phasentrenneinrichtung zum Abtrennen flüssigen oder festen Kohlendioxids.

Die Erfindung erweitert also den bekannten IGCC-(Integrated Gasification Combined Cycle)-Prozess mit CO-Shift und Entschwefelung um eine Tieftemperatur-Kohlendioxid-Abscheidung. Tieftemperaturprozesse werden bereits großtechnisch z.B. für die Luftzerlegung genutzt, so dass Synergieeffekte zwischen diesem Prozess und dem Betrieb der kryogenen Luftzerlegungsanlage denkbar sind.

Grundsätzlich aber ist bei dem der Erfindung zugrundeliegenden Prozess der Kältebedarf geringer, als bei der Luftzerlegungsanlage, da die auftretenden Temperaturen deutlich höher (Bereich um -100°C) als bei der Luftzerlegung sind. Und weil der Siedepunkt des Kohlendioxids wesentlich höher als der der wesentlichen Hauptkomponenten Wasserstoff (H₂), Stickstoff (N₂) und Kohlenmonoxid (CO) liegt, erfolgt die Abtrennung des Kohlendioxids auch weitgehend selektiv. Stickstoff und nicht umgesetztes Kohlenmonoxid verbleiben überwiegend im wasserstoffangereicherten Synthesegasstrom. Stickstoff dient in der Verbrennung als Inertisierungsmedium. Üblicherweise wird Stickstoff aus der Luftzerlegung ohnehin noch zugesetzt.

Kohlendioxid wird flüssig aus dem Prozess abgezogen, d.h. die viel Energie verbrauchende gasförmige Verdichtung entfällt.

Findet die Vergasung bei höheren als den derzeit üblichen Drücken statt, so profitiert die vorliegende Erfindung zusätzlich davon.

Nach dem derzeitigen Stand sollte die Entschwefelung in einem weitgehend H₂S-selektiven Prozess (z.B. chemische Wäsche mit MDEA=Methyldiethanolamin) vor der kryogenen Kohlendioxid-Abtrennung stattfinden.

Vorteilhafterweise umfasst die Kohlendioxid-Abtrennanlage weiterhin einen Synthesegas/Kohlendioxid-Wärmetauscher, der primärseitig vor die erste Kälteanlage und sekundärseitig hinter die erste Phasentrenneinrichtung geschaltet ist. Nach der Phasentrennung wird die kohlendioxidangereicherte Fraktion somit erwärmt und kann auf den für die weitere Verarbeitung notwendigen Druck gebracht werden. Die Erwärmung sollte dabei aber nicht über den Siedepunkt des Kohlendioxids hinaus erfolgen, da sonst das Kohlendioxid wieder mit Hilfe eines Verdichters gasförmig verdichtet werden müsste.

Ebenso ist es vorteilhaft, wenn in der Kohlendioxid-Abtrennanlage ein erster Synthesegas/Synthesegas-Wärmetauscher primärseitig in Strömungsrichtung eines Synthesegases vor den Synthesegas/Kohlendioxid-Wärmetauscher und sekundärseitig in Strömungsrichtung eines kohlendioxidabgereicherten Synthesegases hinter die erste Phasentrenneinrichtung geschaltet ist. Das nach der Abtrennung von Kohlendioxid vorliegende kohlendioxidabgereicherte Synthesegas ist nämlich kalt und muss noch aufgewärmt werden, bevor es der Verbrennung in einer Gasturbine zugeführt werden kann.

Zweckmäßigerweise ist analog ein zweiter Synthesegas/Synthesegas-Wärmetauscher primärseitig zwischen den Synthesegas/Kohlendioxid-Wärmetauscher und die Kälteanlage geschaltet.

Vorteilhafterweise ist eine zweite Phasentrenneinrichtung der ersten Phasentrenneinrichtung in Strömungsrichtung eines kohlendioxidabgereicherten Synthesegases nachgeschaltet. Dies führt bei einer weiteren Abkühlung zu einer höheren Kohlendioxid-Abtrennrate ("Capture rate").

Zweckmäßigerweise ist hierzu eine zweite Kälteanlage der ersten Phasentrenneinrichtung in Strömungsrichtung des kohlendioxidabgereicherten Synthesegases nachgeschaltet und der zweiten Phasentrenneinrichtung vorgeschaltet.

Dabei ist es vorteilhaft, wenn zweifach kohlendioxiabgereichertes Synthesegas der zweiten Kälteanlage zuführbar ist, um dort mit einem Kältemittel der zweiten Kälteanlage in Wärmetausch zu treten. Dadurch kann die Kälte des Produktstroms, also des zweifach kohlendioxidabgereicherten Synthesegases, auf einfache Weise für die Kühlung des Synthesegasstroms genutzt werden, da über den Umweg des Kältemittels Kälte an einer Stelle des Synthesegasstroms definiert so eingebracht werden kann, dass sich das Ausfrieren des Kohlendioxids im Synthesegasstrom besser kontrollieren oder sogar vermeiden lässt.

In einer vorteilhaften Ausführung der Erfindung sind die Wärmetauscherflächen insbesondere der Kälteanlagen mit flüssigem Kohlendioxid spülbar. Wird nämlich durch das Abkühlen des Synthesegases der Gefrierpunkt von Kohlendioxid erreicht, würde sonst ein Teil des Kohlendioxids als Trockeneis an den Wärmetauscherflächen anfallen.

Alternativ zur zweiten Kälteanlage kann es jedoch auch vorteilhaft sein, eine weitere Abkühlung des kohlendioxidabgereicherten Synthesegases mit Hilfe einer Entspannungsturbine herbeizuführen, die der ersten Phasentrenneinrichtung in Strömungsrichtung des kohlendioxidabgereicherten Synthesegases nachgeschaltet und der zweiten Phasentrenneinrichtung vorgeschaltet ist.

Diese Entspannungsturbine kann nämlich vorteilhafterweise mit einem Generator zur Stromerzeugung verbunden werden.

Vorteilhafterweise sind die Schaufeln der Entspannungsturbine beheizbar. Ähnlich wie bei den Wärmetauscherflächen der Kälteanlagen würde sonst bei Erreichen des Gefrierpunkts von Kohlendioxid ein Teil des Kohlendioxids als Trockeneis in der Entspannungsturbine anfallen.

In einer vorteilhaften Ausführungsform ist ein Verdichter in Strömungsrichtung eines zweifach kohlendioxidabgereicherten Synthesegases hinter die zweite Phasentrenneinrichtung geschaltet. Dies ist vor allem dann sinnvoll, wenn mittels einer Entspannungsturbine das Synthesegas gekühlt wurde, um den für den Gasturbinenprozess notwendigen Druck im Synthesegas (wieder) herzustellen.

Es ist zweckmäßig, wenn eine Pumpe in Strömungsrichtung des abgetrennten Kohlendioxids vor den Synthesegas/Kohlendioxid-Wärmetauscher geschaltet ist. Dadurch kann das abgetrennte Kohlendioxid zum Synthesegas/Kohlendioxid-Wärmetauscher gefördert werden und gleichzeitig der Druck des flüssigen Kohlendioxids für eine anschließende Verwendung erhöht werden. Der erforderliche Druck wird entweder durch diese eine Pumpe oder in Kombination mit einer zweiten, dem Synthesegas/Kohlendioxid-Wärmetauscher nachgeschalteten, optionalen Pumpe bereitgestellt.

Im Hinblick auf hohe Abscheideraten ist es vorteilhaft, wenn ein Verdichter der Synthesegas-Abkühlstrecke, insbesondere der ersten Kälteanlage, in Strömungsrichtung des Synthesegases vorgeschaltet ist, um das Synthesegas, aus dem Kohlendioxid abgetrennt werden soll, vor der Abkühlung zu verdichten.

In einer vorteilhaften Ausführung ist die Kohlendioxid-Abtrennungsanlage Teil einer GuD-Anlage mit integrierter Vergasung. Der erwartete Gesamtanlagenwirkungsgradvorteil gegenüber den herkömmlichen Waschverfahren liegt je nach Ausführungsvariante im Bereich von 1 bis 3%-Punkten bei Kohlendioxid-Abscheideraten von über 80%.

Grundsätzlich lässt sich das vorgestellte Konzept auch für GuD-Kraftwerke mit integrierter Reformierung (engl. IRCC = Integrated Reformation Combined Cycle) sowie gegebenenfalls für Prozesse der chemischen Industrie anwenden.

Beim IRCC-Prozess wird Synthesegas aus kohlenstoffhaltigen Energieträgern, wie Erdgas, Leichtbenzin, Methanol, Biogas oder Biomasse gewonnen. Heißer Wasserdampf wird mit dem zu reformierenden Gas (z. B. Erdgas) oder mit verdampfter Flüssigkeit (z. B. Leichtbenzin) vermischt und unter ständiger Energiezufuhr an einem heterogenen Katalysator in der Gasphase umgesetzt.

Ein erster Prozessschritt kann so aussehen:

CH₄ + H₂O ⇄ CO + 3 H₂

(Methan + Wasserdampf ⇄ Kohlenstoffmonoxid + Wasserstoff)

Andere Prozesse sind ebenfalls denkbar.

Das erfindungsgemäße Verfahren bedient sich der beschriebenen Vorrichtung. Die Vorteile der Vorrichtung ergeben sich daher auch für das Verfahren.

Nachfolgend wird die Erfindung beispielhaft anhand der Zeichnungen näher erläutert.

Darin zeigen in vereinfachter und nicht maßstäblicher Darstellung:
Figur 1 eine Kohlendioxid-Abtrennanlage mit einer Kälteanlage und einer Phasentrenneinrichtung sowie Wärmetausch zwischen Synthesegas und Produktströmen der Phasentrennung;
Figur 2 eine Kohlendioxid-Abtrennanlage mit zwei Phasentrenneinrichtungen und einer zweiten Kälteanlage und
Figur 3 eine Kohlendioxid-Abtrennanlage mit zwei Phasentrenneinrichtungen und mit einer Entspannungsturbine.

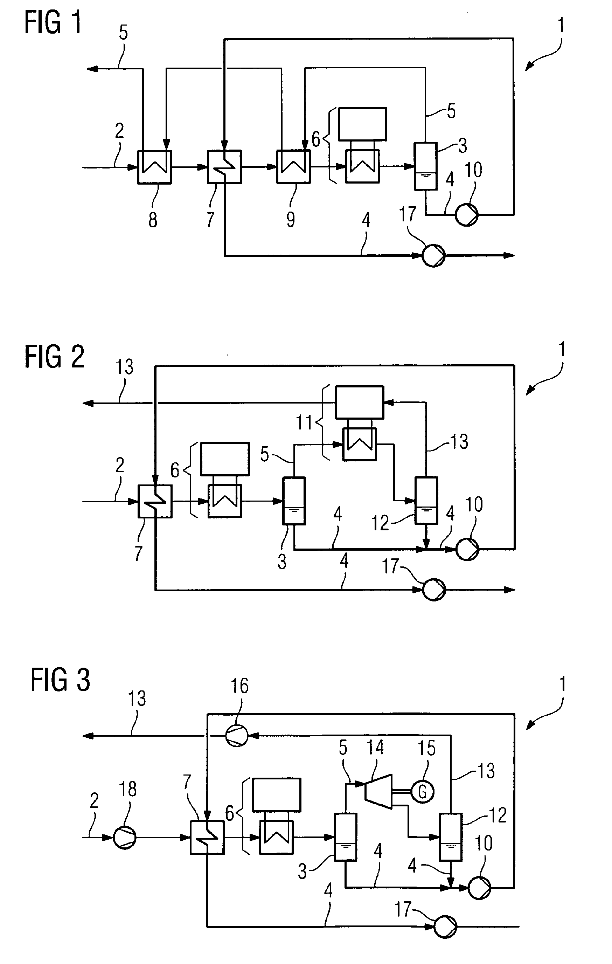

Die Figur 1 zeigt schematisch und beispielhaft eine erfindungsgemäße Kohlendioxid-Abtrennanlage 1. Konvertiertes Synthesegas 2 wird gekühlt und einer ersten Phasentrenneinrichtung 3 zugeführt, in der verflüssigtes oder verfestigtes Kohlendioxid 4 aus dem konvertierten Synthesegas 2 abgetrennt wird. Als weiteres Produkt entsteht bei der Abtrennung des Kohlendioxids 4 ein kohlendioxidabgereichertes Synthesegas 5. Die Kühlung des konvertierten Synthesegases 2 erfolgt zum Teil mittels einer ersten Kälteanlage 6, zum Teil aber auch über einen indirekten Wärmetausch gegenüber den kalten, aufzuwärmenden Produktströmen 4,5. Unter Kälteanlage ist jedes Gerät zu verstehen, das der Kälteerzeugung dient. Das zu kühlende konvertierte Synthesegas 2 wird hierzu mit einer kalten Stelle in der Kälteanlage 6 in Kontakt gebracht und somit gekühlt. Die Wärmetauscher sind ein Synthesegas/Kohlendioxid-Wärmetauscher 7 und ein erster und ein zweiter Synthesegas/Synthesegas-Wärmetauscher 8,9. Im Synthesegas/Kohlendioxid-Wärmetauscher 7 gibt das konvertierte Synthesegas 2 Wärme an das abgetrennte kalte Kohlendioxid 4 ab, das hierzu mit einer Pumpe 10 zum Synthesegas/Kohlendioxid-Wärmetauscher 7 gefördert wird. Gleichzeitig wird der Druck des flüssigen Kohlendioxids für eine anschließende Verwendung erhöht. Der erforderliche Druck wird entweder durch diese eine Pumpe 10 oder in Kombination mit einer zweiten, dem Synthesegas/Kohlendioxid-Wärmetauscher nachgeschalteten, optionalen Pumpe 17 bereitgestellt. Im ersten und zweiten Synthesegas/Synthesegas-Wärmetauscher 8,9 wird das kohlendioxidabgereicherte, wasserstoffreiche Synthesegas 5 im Wärmetausch mit dem konvertierten Synthesegas 2 erwärmt und einer weiteren Erwärmung beziehungsweise Konditionierung für die Verbrennung in einer nicht dargestellten Gasturbine zugeführt.

Die in Figur 2 dargestellte Ausführungsform der Erfindung zeigt eine Kohlendioxid-Abtrennanlage 1 bei der eine höhere Kohlendioxid-Abtrennrate durch eine weitere Abkühlung der gasförmigen Phase des bereits kohlendioxidabgereicherten Synthesegases 5 mittels einer zweiten Kälteanlage 11 erzielt werden kann. Die zweite Kälteanlage 11 ist der ersten Phasentrenneinrichtung 3 in Strömungsrichtung des kohlendioxidabgereicherten Synthesegases 5 nachgeschaltet. Der so abgekühlte Synthesegasstrom 5 wird einer zweiten Phasentrenneinrichtung 12 zugeführt, in der, analog zur ersten Phasentrenneinrichtung 3, flüssiges oder festes Kohlendioxid 4 abgetrennt wird und als weiteres Produkt Synthesegas 13 mit einem Wasserstoffanteil anfällt, der über dem des in der in Figur 1 gezeigten Kohlendioxid-Abtrennanlage 1 erzeugten Synthesegases 5 liegt.

Das zweifach kohlendioxiabgereicherte Synthesegas 13 wird in diesem Ausführungsbeispiel allerdings keinem Synthesegas/Synthesegas-Wärmetauscher 8, 9 zugeführt, sondern der zweiten Kälteanlage 11 zum Wärmetausch mit einem Kältemittel der zweiten Kälteanlage 11. Um höhere Abtrennraten erzielen zu können, muss nämlich das Synthesegas stärker gekühlt werden, als beispielsweise in der Ausführungsform der Figur 1. Die Schwierigkeit hierbei ist jedoch, dass das im Synthesegas enthaltene Kohlendioxid bereits in der Kälteanlage 11 ausfällt, wenn diese bei so tiefen Temperaturen arbeitet. Um die Kälte des Produktstroms, also des zweifach kohlendioxidabgereicherten Synthesegases, trotzdem nutzen zu können, erfolgt der Wärmeübertrag vom kohlendioxidabgereicherten Synthesegas 5 auf das zweifach kohlendioxidabgereicherte Synthesegas 13 über einen dazwischen geschalteten Kältemittelkreislauf in der zweiten Kälteanlage 11. Über den Umweg des Kältemittels kann Kälte an einer Stelle des kohlendioxidabgereicherten Synthesegasstroms 5 definiert so eingebracht werden, dass sich das Ausfrieren des Kohlendioxids im Synthesegasstrom 5 besser kontrollieren, im Idealfall vermeiden lässt.

Figur 3 zeigt, wie Figur 2, eine Ausführungsform der erfinderischen Kohlendioxid-Abtrennanlage 1 mit einer ersten und einer zweiten Phasentrenneinrichtung 3,12. Die Kühlung zwischen den beiden Phasentrenneinrichtungen 3,12 erfolgt in diesem Ausführungsbeispiel aber nicht durch eine zweite Kälteanlage 11, sondern in einer Entspannungsturbine 14. Diese Entspannungsturbine 14 ist zur Stromerzeugung mit einem Generator 15 gekoppelt. Das als Produkt der zweiten Phasentrennung 12 anfallende zweifach kohlendioxidabgereicherte Synthesegas 13 muss bei dieser Ausführungsform, bei der das einfach kohlendioxidabgereicherte Synthesegas 5 durch Entspannung gekühlt wird, wieder verdichtet werden, bevor es der Gasturbine zur Verbrennung zugeführt werden kann. Hierzu ist ein Verdichter 16, insbesondere für mehrstufige Verdichtung mit Zwischenkühlung, vorgesehen.

Ein weiterer Verdichter 18 ist der ersten Kälteanlage 6 in Strömungsrichtung des Synthesegases vorgeschaltet. Im konkreten Ausführungsbeispiel der Figur 3 erfolgt die Verdichtung sogar am Anfang einer Synthesegas-Abkühlstrecke, d.h. noch vor dem Synthesegas/Kohlendioxid-Wärmetauscher 7. Obwohl nur in Figur 3 gezeigt, kann der Verdichter 18 aber auch in den in den Figuren 1 und 2 beschriebenen Ausführungsformen zur Erzielung höherer CO₂-Abscheideraten eingesetzt werden. Er erhöht aber in allen Fällen den Energieeigenbedarf der jeweiligen Anlage und ist daher optional.

## Patentansprüche

1. Eine Kohlendioxid-Abtrennanlage (1) zum Abtrennen von Kohlendioxid (4) aus Synthesegas (2), **gekennzeichnet durch** eine erste Kälteanlage (6) zum Kühlen des Synthesegases (2) und eine in Strömungsrichtung des Synthesegases (2) der ersten Kälteanlage (6) nachgeschaltete erste Phasentrenneinrichtung (3) zum Abtrennen flüssigen oder festen Kohlendioxids (4).

2. Die Kohlendioxid-Abtrennanlage (1) nach Anspruch 1, weiter umfassend einen Synthesegas/Kohlendioxid-Wärmetauscher (7), der primärseitig vor die erste Kälteanlage (6) und sekundärseitig hinter die erste Phasentrenneinrichtung (3) geschaltet ist.

3. Die Kohlendioxid-Abtrennanlage (1) nach Anspruch 2, wobei ein erster Synthesegas/Synthesegas-Wärmetauscher (8) primärseitig in Strömungsrichtung eines Synthesegases (2) vor den Synthesegas/Kohlendioxid-Wärmetauscher (7) und sekundärseitig in Strömungsrichtung eines kohlendioxidabgereicherten Synthesegases (5) hinter die erste Phasentrenneinrichtung (3) geschaltet ist.

4. Die Kohlendioxid-Abtrennanlage (1) nach einem der Ansprüche 2 oder 3, wobei ein zweiter Synthesegas/Synthesegas-Wärmetauscher (9) primärseitig zwischen den Synthesegas/Kohlendioxid-Wärmetauscher (7) und die erste Kälteanlage (6) geschaltet ist.

5. Die Kohlendioxid-Abtrennanlage (1) nach einem der Ansprüche 1 oder 2, wobei eine zweite Phasentrenneinrichtung (12) der ersten Phasentrenneinrichtung (3) in Strömungsrichtung eines kohlendioxidabgereicherten Synthesegases (5) nachgeschaltet ist.

6. Die Kohlendioxid-Abtrennanlage (1) nach Anspruch 5, wobei eine zweite Kälteanlage (11) der ersten Phasentrenneinrichtung (3) in Strömungsrichtung des kohlendioxidabgereicherten Synthesegases (5) nachgeschaltet und der zweiten Phasentrenneinrichtung (12) vorgeschaltet ist.

7. Die Kohlendioxid-Abtrennanlage (1) nach Anspruch 6, wobei zweifach kohlendioxidabgereichertes Synthesegas (13) der zweiten Kälteanlage (11) zum Wärmetausch mit einem Kältemittel der zweiten Kälteanlage (11) zuführbar ist.

8. Die Kohlendioxid-Abtrennanlage (1) nach einem der vorhergehenden Ansprüche, wobei eine Wärmetauscherfläche der Kälteanlage (6, 11) mit flüssigem Kohlendioxid (4) spülbar ist.

9. Die Kohlendioxid-Abtrennanlage (1) nach Anspruch 6, wobei eine Entspannungsturbine (14) der ersten Phasentrenneinrichtung (3) in Strömungsrichtung des kohlendioxidabgereicherten Synthesegases (5) nachgeschaltet und der zweiten Phasentrenneinrichtung (12) vorgeschaltet ist.

10. Die Kohlendioxid-Abtrennanlage (1) nach Anspruch 9, wobei ein Generator (15) mit der Entspannungsturbine (14) verbunden ist.

11. Die Kohlendioxid-Abtrennanlage (1) nach Anspruch 9, wobei Schaufeln der Entspannungsturbine (14) beheizbar sind.

12. Die Kohlendioxid-Abtrennanlage (1) nach einem der Ansprüche 9 bis 11, wobei ein Verdichter (16) in Strömungsrichtung eines zweifach kohlendioxidabgereicherten Synthesegases (13) hinter die zweite Phasentrenneinrichtung (12) geschaltet ist.

13. Die Kohlendioxid-Abtrennanlage (1) nach einem der Ansprüche 2 bis 12, wobei eine Pumpe (10) in Strömungsrichtung des Kohlendioxids vor den Synthesegas/Kohlendioxid-Wärmetauscher (7) geschaltet ist.

14. Die Kohlendioxid-Abtrennanlage (1) nach einem der vorhergehenden Ansprüche, wobei der ersten Kälteanlage (6) in Strömungsrichtung eines Synthesegases ein Verdichter (18) vorgeschaltet ist.

15. Eine GuD-Anlage mit integrierter Vergasung mit einer Kohlendioxid-Abtrennanlage (1) nach einem der vorhergehenden Ansprüche.

16. Verfahren zum Abtrennen von Kohlendioxid (4) aus einem Synthesegas (2), **dadurch gekennzeichnet, dass** das Synthesegas (2) gekühlt wird, so dass sich das Kohlendioxid (4) verflüssigt oder verfestigt und das verflüssigte oder verfestigte Kohlendioxid (4) durch Phasentrennung abgetrennt wird, so dass kohlendioxidabgereichertes Synthesegas (5) entsteht.

17. Das Verfahren nach Anspruch 16, wobei das Synthesegas (2) durch das abgetrennte Kohlendioxid (4) im Wärmetausch so gekühlt wird, dass Kohlendioxid (4) nach dem Wärmetausch immer noch in flüssiger Phase vorliegt.

18. Das Verfahren nach Anspruch 16 oder 17, wobei das Synthesegas (2) durch das kohlendioxidabgereicherte Synthesegas (5) im Wärmetausch gekühlt wird.

19. Das Verfahren nach einem der Ansprüche 16 bis 18, wobei zur Kühlung des Synthesegases (2) verwendete Wärmetauscherflächen mit flüssigem Kohlendioxid (4) gespült werden.

20. Das Verfahren nach einem der Ansprüche 16 bis 19, wobei das kohlendioxidabgereicherte Synthesegas (5) gekühlt und verflüssigtes oder verfestigtes Kohlendioxid (4) abgetrennt wird, so dass zweifach kohlendioxidabgereichertes Synthesegas (13) entsteht.

21. Das Verfahren nach Anspruch 20, wobei das kohlendioxidabgereicherte Synthesegas (5) mit einer zweiten Kälteanlage (11) gekühlt wird.

22. Das Verfahren nach Anspruch 21, wobei das zweifach kohlendioxidabgereicherte Synthesegas (13) der zweiten Kälteanlage (11) zum Wärmetausch mit einem Kältemittel zugeführt wird, das im Wärmetausch das kohlendioxidabgereicherte Synthesegas (5) kühlt.

23. Das Verfahren nach Anspruch 20, wobei das kohlendioxidabgereicherte Synthesegas (5) zur Kühlung entspannt wird.

24. Das Verfahren nach Anspruch 23, wobei das kohlendioxidabgereicherte Synthesegas (5) in einer Entspannungsturbine (14) entspannt wird.

25. Das Verfahren nach Anspruch 24, wobei Schaufeln der Entspannungsturbine (14) beheizt werden.

26. Das Verfahren nach einem der Ansprüche 16 bis 26, wobei das Synthesegas vor der Abkühlung verdichtet wird.
